# EUROPEAN PATENT SPECIFICATION

(11) **EP 2 947 232 B1**
(45) Date of publication and mention of the grant of the patent: **26.12.2018**
(21) Application number: 15166378.8
(22) Date of filing: 05.05.2015
(51) Int. Cl.: E04F 13/08, A47B 95/00, F16B 5/02

(54) **WALL SYSTEM OF COATING PANELS AND HANGING BRACKETS WITH A VERTICAL REGULATION DEVICE**
WANDSSYSTEM VON DECKPLATTEN UND HÄNGENDEN KLAMMERN MIT VERTIKALER REGULIERUNGSVORRICHTUNG
SYSTÈME MURAL DE PANNEAUX DE REVÊTEMENT ET DE PATTES DE SUSPENSION AVEC UN DISPOSITIF DE RÉGULATION VERTICALE

(30) Priority: 14.05.2014 IT MI20140879
(43) Date of publication of application: 25.11.2015
(73) Proprietor: Leonardo S.r.L., 22060 Figino Serenza - Como - (IT)
(72) Inventor: Cattaneo, Carlo, 22060 Figino Serenza (IT)
(74) Representative: Martegani, Franco

(56) References cited:
- EP-A1- 2 199 488
- EP-A2- 0 389 054
- WO-A1-2012/048850

## Description

The present invention relates to a combination of a coating panel, hanging brackets for said coating panel and a section bar, said hanging bracket being provided with a vertical regulation device for the wall assembly of coating panels.

The hanging bracket of the combination according to the invention is characteristically equipped with perfected fixing means for its secure fixing to the panel, also in the presence of minimum panel sections.

As is well-known to skilled persons in the field, for the wall assembly of coating panels, for example for the production of "boiseries" or other types of coatings, for various types of environments and/or walls, hanging brackets are preferably used with devices which allow not only the fixing of each panel to the wall, but also its vertical regulation.

Hanging brackets of this type are described and illustrated, for example, in European patent application EP-A-09177600.5.

The fixing of coating panels of the type described above, to the wall, requires defining an interspace between the panel and the wall, which should be as narrow as possible. For this purpose, these hanging brackets, equipped with height regulation devices, require the formation of appropriate seats in the panel.

The formation of these seats requires a consequent reduction in the useful resistant section through which the fixing screws of the hanging bracket to the panel itself are screwed, making the system insecure and therefore dangerous.

The document WO 2012/048850 discloses an adjustable anchoring device for the wall assembly of coating panels, comprising an anchoring plaque to a panel and a coupling for anchoring to a wall, said device comprises a slide sliding linearly with respect to said plaque in a first direction, said coupling being at least partially associated with said slide and movable with respect to the latter in at least a second direction, substantially perpendicular with respect to said first direction.

The general objective of the present invention is to provide a combination with a hanging bracket with a height regulation device structured so as to allow it to be fixed securely to the panel itself, without running the risk of dangerous structural yielding, i.e. the detachment of the hanging bracket from the panel when in use.

The above objective is achieved by a hanging bracket with a regulation device in height having the characteristics specified in the enclosed main claim and subclaims.

The structural and functional characteristics of the present invention and its advantages with respect to the known art will appear more evident from the following description, referring to the enclosed drawings, which show a hanging bracket produced according to the innovative principles of the same invention.

In the drawings:
- figure 1 is an exploded perspective view illustrating a possible embodiment of the hanging bracket according to the invention;

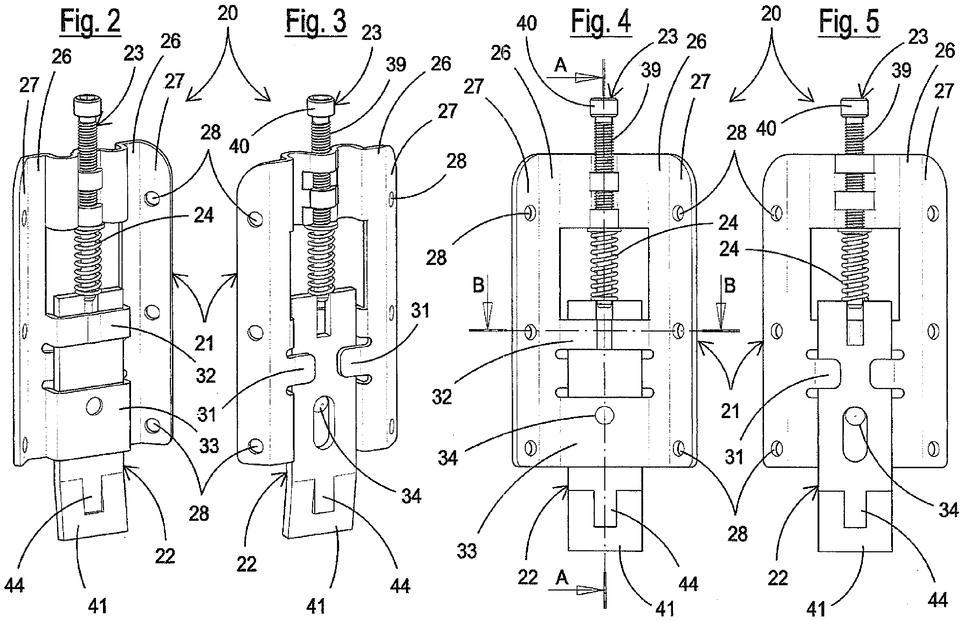

- figures 2, 3 are two perspective views illustrating on opposite sides respectively, the hanging bracket of figure 1, but in an assembled condition;
- figures 4, 5 are two raised views respectively illustrating the opposite sides of the hanging bracket of figures 2, 3;

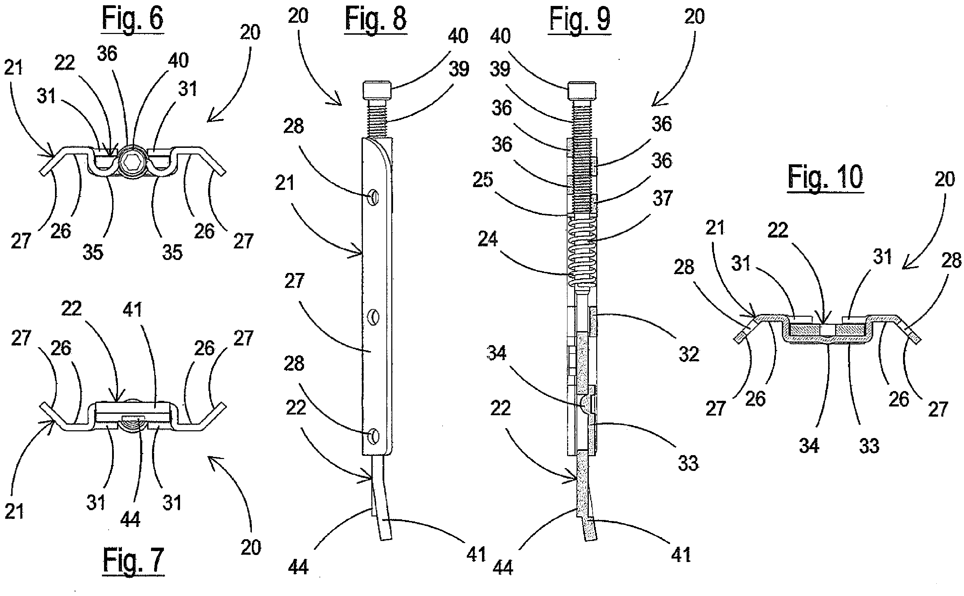

- figures 6, 7, are two plan views from above and below respectively, of the hanging bracket of figures 4, 5;
- figure 8 is a raised side view of the hanging bracket of figures 2, 3;
- figure 9 is a sectional view taken according to the line A-A of figure 4;
- figure 10 is a sectional view taken according to the line B-B of figure 4;
- figure 11 is a raised front view illustrating a hanging bracket according to the invention fixed to the panel;
- figure 12 is a section view taken according to the line C-C of figure 11;
- figure 13 is a vertical section illustrating a panel assembled to the wall by means of the hanging brackets according to the invention; and
- figure 14 is a perspective view illustrating a panel equipped with hanging brackets according to the invention.

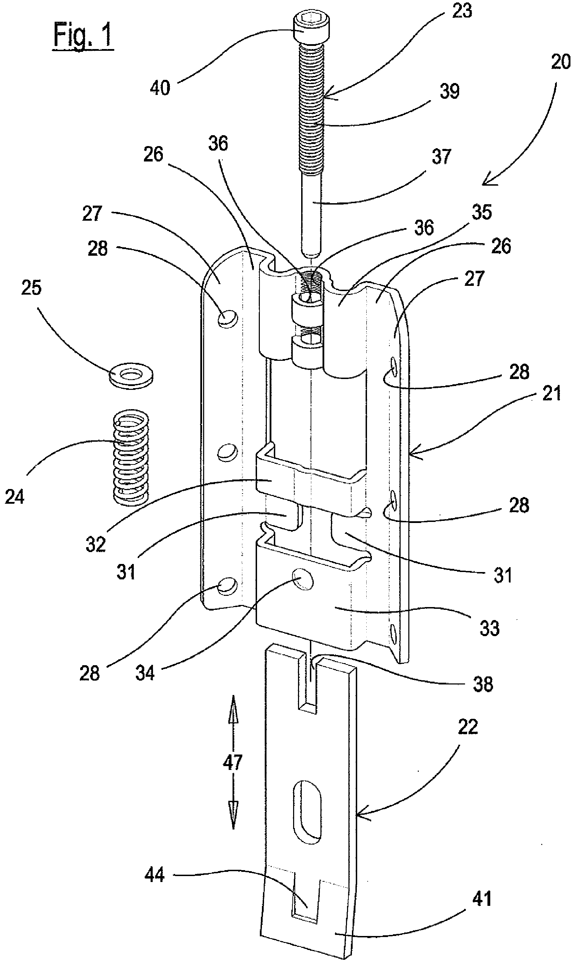

With reference first of all to figure 1 of the drawings, a hanging bracket with a vertical regulation device, for the wall assembly of coating panels, is indicated as a whole with 20 and comprises a regulation mechanism which is structurally composed of five components: a base 21, a cursor or slide 22, a regulation screw 23, a contrast spring 24, and a washer 25.

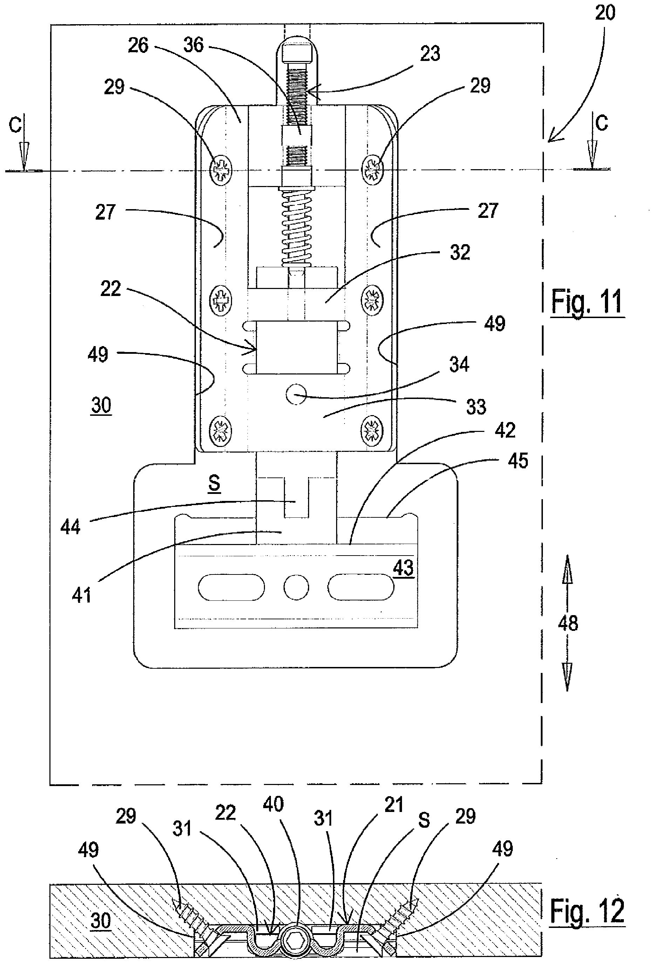

The base 21, for example made of metal, is generally rectangular and comprises a central section 26 from which two side flanges or flaps 27 extend characteristically, according to the invention, tilted (oblique) with respect to the central section 26, with holes 28 for the passage of screws 29 (figure 12), for fixing the hanging bracket 20 to a panel 30 to be assembled - firmly and in a correct position - to a wall P (figures 11-14) as described in more detail hereunder.

The panel 30 and the wall P can be of any material and type.

Constraining and translation seats of the slide 22, and regulation screw 23, are envisaged between the above tilted side flanges 27, on the central section 26 of the base 21.

More specifically, the constraining and translation seat of the slide 22 is defined by two interspaced sections or supporting and sliding planes 31, 32 and a jumper 33 with a retaining clew 34 (against free slippage) of the slide 22.

The section 31 is coplanar with the section 26, whereas the section 32 and jumper 33 project only for as much as is sufficient for allowing the passage and correct sliding of the slide 22.

The constraining and translation seat of the screw 23 comprises a shaped section 35 with threaded arched portions 36, opposing and reciprocally offset, which define an axial passage for the screw 23. For this purpose, the stem of the screw 23 has a non-threaded section 37 which is freely inserted, at the tip, inside a milled end 38 of the slide 22, and a threaded section 39 with an operating head 40.

At the opposite end of the milled end 38, the slide 22 ends with a protruding tooth 41 destined for being anchored inside a channel-like seat 42 of a supporting section bar 43 (of the known type) fixed to the wall P.

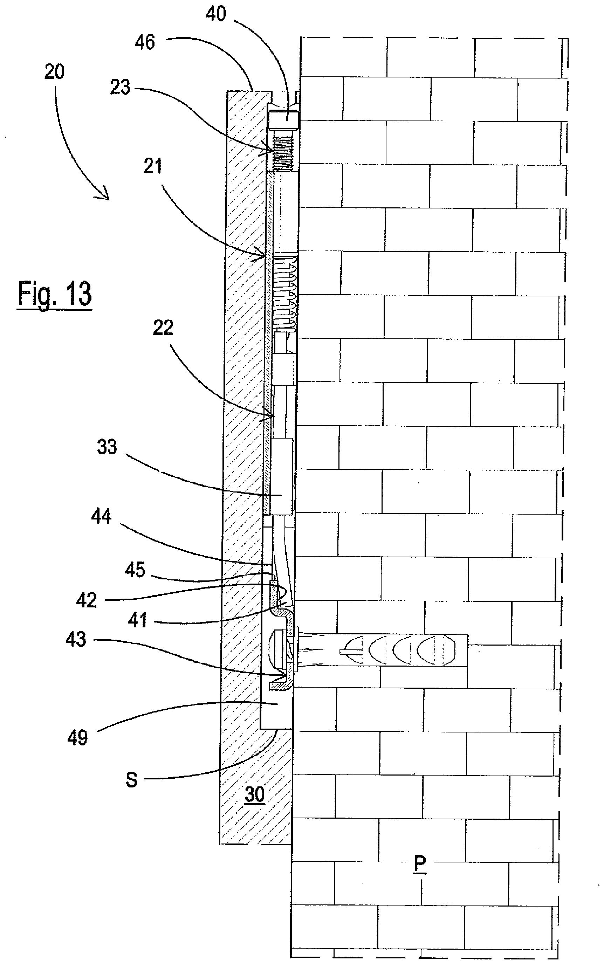

A stop 44 which is buffered against the free edge 45 of said seat 42 collaborates with said tooth 41, when the tooth 41 itself is inserted in the above-mentioned channel-like section (figure 13).

As can be clearly seen from the drawings, the contrast spring 24 acts between the end of the slide 22, opposite the tooth 41, and the section 35, in order to favour and ensure the engagement of the tooth 41 inside the channel-like seat 42 of the section bar 43.

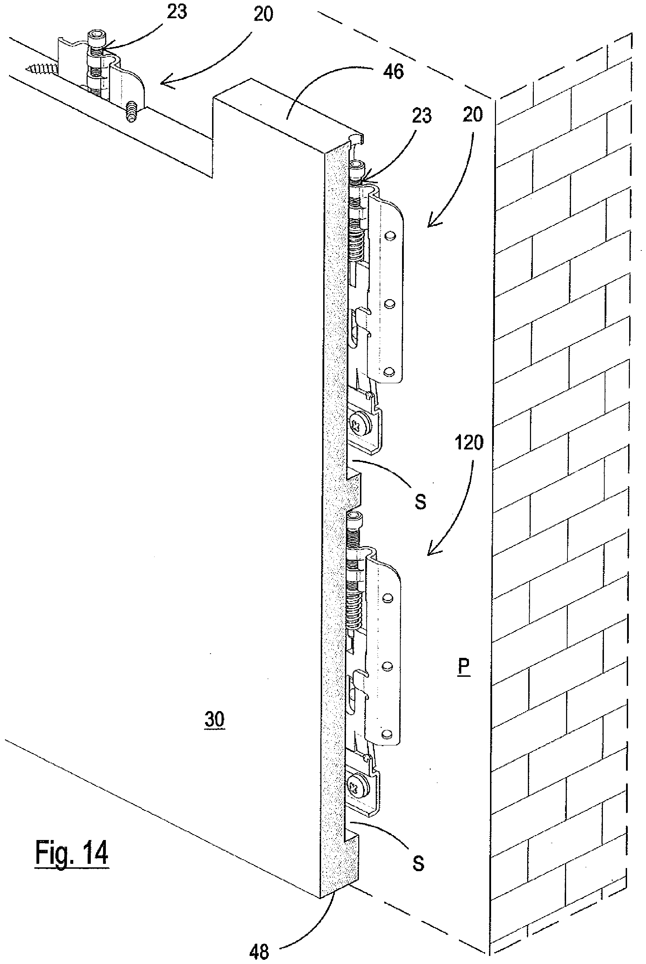

As can be clearly seen from figures 12 and 14, according to the teaching of the present invention, the hanging bracket 20 is stably fixed inside a corresponding seat S of the panel 30 by means of the above-mentioned oblique flanges 27 which buffer with their free edge against the side containment wall 49 of the same seat S.

Said side wall 49 can, as illustrated, be vertical (perpendicular to the bottom surface of the seat S), or oblique with the same inclination as the flanges 27, which, in this way, completely rest on the same.

The stable fixing is then effected by means of the screws 29 which are screwed through an adequate maximum resistant section of the panel 30 (figure 12).

For skilled persons in the field, the functioning of the hanging brackets with a vertical regulation device according to the invention, is clear from what is described above, with reference to the figures and is briefly the following.

With reference to figures 13, 14, a panel 30 can be assembled on a wall P by means of a plurality of hanging brackets 20 according to the invention, which are fixed behind the panel 30 itself, housed inside said seat S, situated near the upper edge 46. The fixing of the hanging brackets 20 is effected, according to the invention, by means of the oblique screws 29 which pass through an adequate useful section of the panel 30, avoiding the smaller section in correspondence with the seat S, thanks to the insertion of the tilted side flanges 27 with holes 28.

The panel 30 can therefore be safety hooked to the section bar 43, by inserting the teeth 41 of the hanging brackets 20 in the seat 42 and buffering the stops 44 against the edge 45.

After effecting this anchoring operation of the panel 30 to the wall, its position in height can be subjected to fine tuning by acting - by means of a screw driver - on the screws 23, whose screwing and unscrewing causes a sliding of the slide 22 in the directions of the arrow 47 and consequently a vertical translation of the panel 30 in the directions of the arrow 48, due to the contrast action of the slide 22 between the section bar 43 integral with the wall P and the base 21 integral with the panel 30. The weight of the panel 30 ensures the engagement of the tip of the regulation screw 23 inside the milling 38 of the slide 22.

Figure 14 shows a possible embodiment of the hanging brackets according to the invention, wherein two series of identical hanging brackets 20, 120, are envisaged in correspondence with both the upper edge 46 and lower 48 edge of the panel 30.

In conformance with this method of use of the invention, the panel 30 is first hooked to the wall P by means of the lower hanging brackets 120 (for example, all pre-regulated in the same way) and then constrained by means of the upper hanging brackets 20.

Once this operation has been effected, the position in height of the panel 30 can be regulated by acting only on the regulation screws 23 of the upper hanging brackets 20, as the lower hanging brackets 120 are evidently inaccessible.

The objective of the invention has therefore been achieved, for providing a hanging bracket with a regulation device in height which can be fixed at the rear of the panel, inside a specific seat S, at the same time ensuring a stable fixing of the hanging brackets in spite of the presence of smaller section of panel due to the necessity of providing the above-mentioned seat S.

The protection scope of the invention is defined by the enclosed claims.

## Claims

1. Combination of a coating panel (30), hanging brackets (20) for said coating panel and a section bar (43), in which:
- said coating panel (30) comprises a seat (S) defined in the panel by at least one side containment wall (49) and provided in a section of the panel having a reduced thickness with respect to surrounding sections of the panel having a greater thickness, so that said seat (S) is a recess in the panel (30),
- said hanging brackets (20) are provided with a vertical regulation device for the assembly on a wall (P) of said coating panel (30), said hanging brackets comprising a regulation mechanism (22,23) supported by a supporting base (21) fixed inside said seat (S) of said coating panel (30), and wherein said regulation mechanism (22,23) comprises anchoring means (41) to the section bar (43) fixable to said wall (P), said base (21) being provided with fixing means (27,28,29) for fixing the hanging brackets (20) to the panel (30), **characterised in that** said regulation mechanism (22,23), said supporting base (21) and said section bar (43) are entirely contained in said seat (S), and **in that** said fixing means consist of flanges (27) or tilted side flaps, oblique with respect to said base (21) provided with holes (28) for the passage of fixing screws (29) of the base itself (21) and consequently of the hanging bracket (20), the free edges of said flanges (27) being buffered against said side containment wall (49) of said seat (S), on said section having a greater thickness of said panel, said screw (29) being screwed through an adequate maximum resistant section of the panel (30).

2. Combination according to claim 1, wherein the hanging brackets (20) are **characterized in that** said regulation mechanism (22,23) comprises a slide (22) and a regulation screw (23) acting at the upper end of said slide (22), whose lower end comprises said anchoring means (41) to said section bar (43).

3. Combination according to claim 1, wherein the hanging brackets (20) are **characterized in that** seats are provided between said side flanges (27) for fixing the hanging brackets (20) to said panel (30), for constraining (33,34) and translating (31,32) said slide (22), and for constraining and translating (35,36) said screw (23).

4. Combination according to claim 2, wherein the hanging brackets (20) are **characterized in that** said anchoring means (41) consist of a protruding tooth suitable for being inserted inside a channel-like seat (42) of the section bar (43) and a stop (44) which is buffered against a free edge (45) of said seat (42).

5. Combination according to claim 3, wherein the hanging brackets (20) are **characterized in that** said constraining seats (33,34) consist of a jumper (33) with a retaining clew (34) of said slide (22), said translation seats (31,32) consist of two sections or interspaced supporting and sliding planes, said jumper (33) protrudes from the base (21) for as much as is sufficient for allowing the passage and correct sliding of the slide (22).

6. Combination according to claim 3, wherein the hanging brackets (20) are **characterized in that** said constraining and translation seats (33,34) of said screw (23) comprise a shaped portion (35) with threaded arched portions (36), opposing and reciprocally offset, which define an axial passage for said screw (23).

7. Combination according to claims 2 and 6, wherein the hanging brackets (20) are **characterized in that** the stem of said regulation screw (23) has a non-threaded section (37) which is freely inserted, at the tip, inside a milled end (38) of said slide (22), and a threaded portion (39) with an operating head (40) which is coupled with said portions (36).

8. Combination according to claim 2, wherein the hanging brackets (20) are **characterized in that** a contrast spring (24) acts between said slide (22) and said supporting base (21).

## Patentansprüche

1. Kombination aus einer Beschichtungstafel (30), Hängehalterungen (20) für die Beschichtungstafel sowie einer Profilstange (43), wobei:
- die Beschichtungstafel (30) einen Sitz (S) umfasst, der in der der Tafel durch zumindest eine Seitenaufnahmewand (49) definiert und in einem Teil der Tafel vorgesehen ist, der eine reduzierte Dicke in Bezug auf umgebende Teile der Tafel, die eine größere Dicke aufweisen, besitzt, sodass der Sitz (S) eine Ausnehmung in der Tafel (30) ist,
- die Hängehalterungen (20) mit einer Vertikalregulierungsvorrichtung für die Montage an einer Wand (P) der Beschichtungstafel (30) versehen sind, wobei die Hängehalterungen einen Regulierungsmechanismus (22, 23) umfassen, der von der Stützbasis (21) getragen ist, die in dem Sitz (S) der Beschichtungstafel (30) befestigt ist, und wobei der Regulierungsmechanismus (22, 23) ein Verankerungsmittel (41) an der Profilstange (43) umfasst, das an der Wand (P) befestigbar ist, wobei die Basis (21) mit einem Befestigungsmittel (27, 28, 29) zum Befestigen der Hängehalterungen (20) an der Tafel (30) versehen ist, **dadurch gekennzeichnet, dass** der Regulierungsmechanismus (22, 23), die Stützbasis (21) und die Profilstange (43) vollständig in dem Sitz (S) enthalten sind,
und dass das Befestigungsmittel aus Flanschen (27) oder gekippten Seitenklappen schräg in Bezug auf die Basis (21) besteht, die mit Löchern (28) für den Durchgang von Befestigungsschrauben (29) der Basis selbst (21) und folglich der Hängehalterung (20) versehen sind, wobei die freien Ränder der Flansche (27) gegen die Seitenaufnahmewand (49) des Sitzes (S) an dem Teil, das eine größere Dicke der Tafel aufweist, gepuffert sind, wobei die Schraube (29) durch einen angemessenen, maximal resistenten Teil der Tafel (30) geschraubt ist.

2. Kombination nach Anspruch 1, wobei die Hängehalterungen (20) **dadurch gekennzeichnet sind, dass** der Regulierungsmechanismus (22, 23) einen Schlitten (22) und eine Regulierungsschraube (23) umfasst, die an dem oberen Ende des Schlittens (22) wirkt, dessen unteres Ende das Verankerungsmittel (41) an der Profilstange (43) umfasst.

3. Kombination nach Anspruch 1, wobei die Hängehalterungen (20) **dadurch gekennzeichnet sind, dass** Sitze zwischen den Seitenflanschen (27) zum Befestigen der Hängehalterungen (20) an der Tafel (30) zum Einschränken (33, 34) und Verschieben (31, 32) des Schlittens (22) und zum Einschränken und Verstellen (35, 36) der Schraube (23) vorgesehen sind.

4. Kombination nach Anspruch 2, wobei die Hängehalterungen (20) **dadurch gekennzeichnet sind, dass** das Verankerungsmittel (41) aus einem vorragenden Zahn, der zum Einsetzen in einen kanalartigen Sitz (42) der Profilstange (43) geeignet ist, sowie einem Anschlag (44) besteht, der gegen einen freien Rand (45) des Sitzes (42) gepuffert ist.

5. Kombination nach Anspruch 3, wobei die Hängehalterungen (20) **dadurch gekennzeichnet sind, dass** die einschränkenden Sitze (33, 34) aus einer Brücke (33) mit einem Rückhalteansatz (34) des Schlittens (22) besteht, wobei die Verschiebesitze (31, 32) aus zwei Teilen oder beabstandeten Stütz- und Gleitebenen bestehen, wobei die Brücke (33) von der Basis (21) soweit vorragt, wie es ausreichend ist, um den Durchgang und das korrekte Gleiten des Schlittens (22) zuzulassen.

6. Kombination nach Anspruch 3, wobei die Hängehalterungen (20) **dadurch gekennzeichnet sind, dass** die einschränkenden Schiebesitze (33, 34) der Schraube (23) einen geformten Abschnitt (35) mit Gewindebogenabschnitten (36) umfassen, die einander gegenüberliegen und zueinander versetzt sind, was einen axialen Durchgang für die Schraube (23) definiert.

7. Kombination nach einem der Ansprüche 2 und 6, wobei die Hängehalterungen (20) **dadurch gekennzeichnet sind, dass** der Schaft der Regulierungsschraube (23) einen gewindefreien Teil (37), der frei an der Spitze in ein gefrästes Ende (38) des Schlittens (22) eingesetzt ist, sowie einen Gewindeabschnitt (39) mit einem Betätigungskopf (40) umfasst, der mit den Abschnitten (36) gekoppelt ist.

8. Kombination nach Anspruch 2, wobei die Hängehalterungen (20) **dadurch gekennzeichnet sind, dass** eine Gegenfeder (24) zwischen dem Schlitten (22) und der Stützbasis (21) wirkt.

## Revendications

1. Combinaison d'un panneau de revêtement (30) de supports de suspension (20) destinés audit panneau de revêtement, et d'une barrette profilée (43), dans laquelle :
- ledit panneau de revêtement (30) comprend un siège (S) qui est délimité dans le panneau par au moins une paroi de maintien latéral (49) et qui est ménagé dans une partie du panneau dotée d'une épaisseur réduite par rapport aux parties du panneau qui l'entourent dotées d'une plus grande épaisseur, de telle manière que ledit siège (S) est en creux dans le panneau (30),
- lesdits supports de suspension (20) sont munis d'un dispositif de réglage vertical en vue du montage dudit panneau de revêtement (30) sur une paroi (P), lesdits supports de suspension comprenant un mécanisme de réglage (22, 23) porté par une base de support (21) fixée à l'intérieur dudit siège (S) dudit panneau de revêtement (30) et dans laquelle ledit mécanisme de réglage (22, 23) comprend un moyen d'ancrage (41) à ladite barrette profilée (43) susceptible d'être fixée à ladite paroi (P), ladite base (21) étant munie de moyens de fixation (27, 28, 29) destinés à fixer les supports de suspension (20) au panneau (30), **caractérisée en ce que**
ledit mécanisme de réglage (22, 23), ladite base de support (21) et ladite barrette profilée (43) sont entièrement contenus dans ledit siège (S), et **en ce que** lesdits moyens de fixation consistent en des ailes (27) ou rabats latéraux pliés obliquement par rapport à ladite base (21) munies de trous (28) destinés au passage de vis de fixation (29) de la base (21) elle-même et, en conséquence, du support de suspension (20), les bords libres desdites ailes (27) étant en butée contre ladite paroi (49) de maintien latéral dudit siège (S) sur ladite partie dotée d'une plus grande épaisseur dudit panneau, ladite vis (29) étant vissée dans une partie du panneau (30) de résistance maximum adéquate.

2. Combinaison selon la revendication 1 dans laquelle les supports de suspension (20) sont **caractérisés en ce que** ledit mécanisme de réglage (22, 23) comprend un coulisseau (22) et une vis de réglage (23) qui agit sur l'extrémité supérieure dudit coulisseau (22), dont l'extrémité inférieure comprend ledit moyen d'ancrage (41) à ladite barrette profilée (43).

3. Combinaison selon la revendication 1 dans laquelle les supports de suspension (20) sont **caractérisés en ce que** des sièges sont ménagés entre lesdites ailes latérales (27) en vue de fixer lesdits supports de suspension (20) audit panneau (30), en vue de contraindre (33, 34) et de déplacer (31, 32) ledit coulisseau (22) et de contraindre et de déplacer (35, 36) ladite vis (23).

4. Combinaison selon la revendication 2 dans laquelle les supports de suspension (20) sont **caractérisés en ce que** ledit moyen d'ancrage (41) consiste en une dent en saillie convenable pour être insérée à l'intérieur d'un siège analogue à un canal (42) de la barrette profilée (43) et en un organe d'arrêt (44) qui est en butée contre un bord libre (45) dudit siège (42).

5. Combinaison selon la revendication 3 dans laquelle les supports de suspension (20) sont **caractérisés en ce que** lesdits sièges de contrainte (33, 34) consistent en un pontet (33) comportant un guide de retenue (34) dudit coulisseau (22), lesdits sièges de translation (31, 32) consistant en deux sections ou en des plans de support et de glissement espacés l'un de l'autre, ledit pontet (33) faisant saillie à partir de la base (21) d'autant que ce qui est suffisant pour permettre le passage et le glissement correct du coulisseau (22).

6. Combinaison selon la revendication 3 dans laquelle les supports de suspension (20) sont **caractérisés en ce que** lesdits sièges de contrainte et de translation (33, 34) de ladite vis (23) comportent une partie en forme (35) présentant des parties arquées filetées (36) qui se font face et qui sont réciproquement décalées, lesquelles définissent un passage axial pour ladite vis (23).

7. Combinaison selon les revendications 2 et 6 dans laquelle les supports de suspension (20) sont **caractérisés en ce que** le fût de ladite vis de réglage (23) comporte une partie non filetée (37) qui est insérée librement au niveau de l'extrémité à l'intérieur d'une extrémité fraisée (38) dudit coulisseau (22), et une partie filetée (39) comportant une tête fonctionnelle (40) qui est couplée auxdites parties (36).

8. Combinaison selon la revendication 2 dans laquelle les supports de suspension (20) sont **caractérisés en ce qu'**un ressort de compression (24) agit entre ledit coulisseau (22) et ladite base de support (21).
